Europäisches Patentamt

European Patent Office

Office européen des brevets

(11) Publication number: **0 056 181**
A1

## (12) EUROPEAN PATENT APPLICATION

(21) Application number: **81304933.5**

(22) Date of filing: **21.10.81**

(51) Int. Cl.³: **C 08 J 7/10,** D 01 F 6/02, B 29 D 7/20

(30) Priority: **31.12.80 US 221713**

(43) Date of publication of application: **21.07.82** Bulletin 82/29

(84) Designated Contracting States: **BE DE FR GB IT NL**

(71) Applicant: **MOBIL OIL CORPORATION, 150 East 42nd Street, New York New York 10017 (US)**

(72) Inventor: **Canterino, Peter John, 39 Mary Drive, Towaco New Jersey (US)**

(74) Representative: **Cooper, John Anthony et al, Mobil Court 3 Clements Inn, London WC2A 2EB (GB)**

(54) Method for producing high density films of ethylene polymers.

(57) Films of high density ethylene polymers having high overall tensile strength and tear resistance in the machine direction are produced by allowing the formed film to crystallize and subjecting it to ionizing radiation.

EP 0 056 181 A1

0056181

## METHOD FOR PRODUCING HIGH DENSITY
## FILMS OF ETHYLENE POLYMERS

This invention relates to the production of high density polyethylene film of high tensile strength and high tear resistance.

High density polymers are generally regarded as those having a density of at least 0.94 $g/cm^3$. This high density is widely considered to be caused by the high degree of order exhibited in the molecular structure, i.e., the high degree of crystallinity. Such high density polymers are generally used for applications where physical properties such as strength, hardness, stiffness, and heat tolerance are required, and may be contrasted with low density polymers which have a density of less than 0.94 $g/cm^3$ and a random or amorphous molecular structure. Films formed from such different polymers are characterized by properties attributable to, among others, the degree of crystallinity present therein. For example, films made from low density polymers such as low density polyethylene possess good impact strength and tear strength (tear strength being defined as the force required to propagate an initiated tear in a film under controlled conditions) whereas sheet strength, as defined by tensile strength for example, is greater in high density polymer films. Therefore, in order to improve the sheet strength of polymer films, many film production processes include orientation as an additional manufacturing step.

Orientation is a process whereby a plastics film or sheet is stretched in such a way as to orient the polymeric chains parallel to the plane of the film but more or less randomly within this plane. Uniaxial orientation (stretching in one direction only) increases the tensile strength and elastic modulus in the direction of stretching and decreases these qualities in the perpendicular direction. Biaxial, or planar, orientation occurs when a film or sheet is drawn in more than one direction, generally along two axes at right angles.

While uniaxial orientation produces maximum strength in the direction of orientation, it has been found that a uniaxially oriented sheet of film will often tend to crack and split in the direction of stretching.

In the case of low density polymer sheet, it is known from U.S. Patent 4,258,166 that a low density polyethylene film having improved film strength in the direction transverse to that of orientation may be produced by orienting the film at a temperature below its crystalline melting point. This process can be referred to as cold-stretching or cold-orientation.

Other post-finishing methods for treating polymer sheets (films or otherwise) to improve physical characteristics include irradiation of the polymer with high energy beams such as electron, X-ray, neutron, and similar ionizing radiations. A whole series of U.S. patents discloses the use of radiation treatment to prepare polyethylene products which remain clear and transparent regardless of changes in physical form. Thus, U.S. Patent 2,855,517 describes a process in which transluscent polyethylene is heated until it becomes clear and transparent, i.e., beyond its transition point; is quenched, for example by chilling; and is then irradiated. Subsequent alterations in physical environment, for example heating to the transition point of the polymer before irradiation, and cooling to room temperature, do not remove the transparent characteristics of the treated polyethylene. In U.S. Patent 2,877,500, the polyethylene is first irradiated, then heated to transparency temperature and hot-stretch-oriented in one direction at least 100% at a temperature of not less than 75°C, and finally cooled. U.S. Patent 2,878,174 discloses a process in which polyethylene is irradiated while in the molten state, i.e., at a temperature of at least 105°C, to obtain a product having increased permanent transparency. The polyethylene produced by this method is intended to be formed into articles while in the hot, clear state and thereafter cooled to form a substantially clear article. U.S. Patent 2,904,480 describes a process for producing permanently transparent formed articles such as squeeze bottles and beakers in which a shaped polyethylene article is irradiated at below 105°C until the point of deformation is raised by irradiation with at least 750,000 electron volts. The article is then heated to the point of clarity and transparency, and then quenched to achieve limited transparency. Subsequently, the article is heated and irradiated a second time to attain a higher degree of fixed clarity. U.S. Patent 3,144,398 discloses a method for preparing polyethylene useful for containers, closures, squeeze bottles and toys, calling for cold-stretching the polyethylene at a temperature of not more than 65°C and then irradiating at a dosage between 20 X $10^6$ and 200 X $10^6$ rep. The polyethylene should then be heated to a temperature of at least 66°C to cause the polyethylene to shrink. U.S. Patent 3,144,399 describes an irradiated biaxially oriented polyethylene stretched at least 100% in each direction below the break limit, which is characterized by, inter alia, a high shrink energy. U.S. Patents 2,858,442; 2,879,092; 2,906,678; 2,906,679; 2,948,666; 3,330,748 and 3,362,897 are related to processes or apparatus for improving polymers by irradiation.

U.S. Patent 3,099,611 describes a process for producing a polymer product having improved stress cracking resistance in which a linear polyethylene having a molecular weight of at least 30,000 and a density greater than 0.94 is irradiated while in contact with vinyl chloride to a total dose between $10^6$ and $10^7$ rads.

Other techniques for utilizing irradiation in the production of polymers are disclosed in U.S. Patents 3,090,770 and 3,226,454 which provide for blending a major portion of non-irradiated polyethylene with a minor portion of polyethylene which has been cross-linked by irradiation to produce a polyethylene, especially high density polyethylene and blends of high density and low density polyethylenes, which have improved clarity and which can be subsequently shaped more readily because of the advantageous flow properties of the non-cross-linked polymer fraction.

U.S. Patent 2,805,072 describes a method for preparing golfballs in which the toughness of the polyethylene cover has been increased by irradiation after the cover has been applied to the core of the ball.

U.S. Patent 3,090,735 discloses a method of making a fiber with reversible dimensional changes by irradiating polyethylene fiber with 2.7 to 1000 megareps followed by melting the fiber and allowing it to recrystallize.

U.S. Patent 3,079,312 describes a process for preparing a shaped article having dimensional and thermal stability as well as resistance to oxidative degradation which calls for irradiating a mixture of polyolefin and monomeric methacrylic acid and/or an ester thereof.

U.S. Patent 2,981,668 describes a process for increasing the resistance of polyethylene to physical and chemical change by subjecting a previously molded polyethylene article to a dose of not less than one million rep.  Other processes featuring radiation treatment of polyethylene are concerned with, for example, rendering the resin more adherent to ink, as described in U.S. Patent 3,018,189 and to other film materials such as tough, impermeable polyester as described in U.S. Patent 3,188,266.

In each of those patents the treatment of polymers by irradiation generally enhances physical and/or chemical properties of the resin by, _inter alia_, cross-linking of the polymeric chains.  Irradiation applied to a film formed from low density polymer increases the strength of the sheet due to cross-linking possibly because this cross-linking may be analogous to a greater degree of crystallinity of the molecular structure.  Conversely, it might well be expected that the tear strength of an irradiated sheet of film will decrease since lower molecular crystallinity is normally associated with higher tear strength.  In the case of films formed from high density polymers, these tendencies are exaggerated because the starting polymer already possesses a high degree of crystallinity in its molecular structure.  Indeed, high density polymer film, while desirable from the standpoint of
tensile strength, has a pronounced tendency to tear and, for this
reason, cannot be used in the fabrication of such products as
merchandise bags and refuse bags which require a high degree of
tear resistance.  It has been suggested that one reason for the
strength exhibited by the high density polymer film is that the
already highly-ordered polymeric structure of the high density
polymers becomes even more crystalline by means of hot melt
orientation which results during film formation.  Specifically,
high density polymer film is often produced by the so-called
conventional blown-film process in which molten polymer is extruded
through an annular die.  The molten tube extends from the face of
the die to a take-up nip positioned generally above the die and is
continuously filled with a relatively inert gas, for example air,
through a tube protruding from the middle of the die face into the
tube.  The molten polymer cools as it is drawn from the die to the
take-up nip, but prior to the polymer reaching its crystallization
point the drawing force exerted on the film results in an
orientation of the polymeric chains in the machine direction.  This
process is referred to as hot melt orientation, and film produced
in this manner has good tensile strength, but poor tear resistance,
in the machine direction.  In terms of producing high strength
polymer films, this is a considerable drawback since the high
strength is achieved by merely forming the polymer film, i.e., no
cold-stretch orientation is required.  Accordingly, a process for
forming high density film having good tear resistance and high
strength properties without the necessity for cold-stretching would
be highly desirable.

        The present invention is based on the surprising
observation that high density polyethylene can be fabricated into
films and sheets having high tensile strength and high tear
strength in the machine direction without application of a positive
orientation step.  In accordance with the film-forming method of
this invention, high density polyethylene is formed into a film employing any of the known, conventional techniques, the film is permitted to undergo crystallization and the crystallized film is then subjected to an amount of ionizing irradiation sufficient significantly to increase the tear strengths of the film compared to that of the film prior to irradiation.

The present invention therefore provides a method for producing a high density film of an ethylene homopolymer or a copolymer of ethylene and up to 10 weight percent of one or more other monomers copolymerizable with ethylene having a high tensile strength and a high tear resistance in the machine direction, which comprises forming a film from the high density ethylene polymer, allowing the film to crystallize and subjecting the film to ionizing radiation without applying to the film a positive orientation step.

Since the film-forming method of this invention does not require the positive application of an orientation step to achieve high tensile strength and high tear strength in the machine direction, for example the application of uniaxial or biaxial stretching as in the prior art, considerable savings are realized from the omission of orienting apparatus, its energy consumption and its maintenance and servicing requirements. The films resulting from the method of the present invention are especially well-suited for the manufacture of merchandise bags, novelty bags, garbage can liners and similar articles.

The term "polyethylene" as used herein contemplates both homopolymers of ethylene as well as copolymers of this olefin with up to 10 weight percent of one or more other monomers copolymerizable with ethylene.

The films which are produced and irradiated according to the present invention are high density polyethylene (HDPE) films or sheets produced by any conventional film-forming technique, for example extrusion and casting. Such resins can be conventional ethylene homopolymers or copolymers of ethylene with up to 10 weight percent of one or more other unsaturated monomers copolymerizable with ethylene. Preferred unsaturated monomers for copolymerization with ethylene comprise olefinic monomers having from 3 to 8 carbon atoms. The methods employed to form the polymers useful herein are not critical to the success of this invention and are well known in the art.

As stated above, the polymeric films or sheets of such resins may be produced by any conventional means, for example extrusion through a slot die or by casting techniques. The important consideration with regard to the film or sheet material, beyond the ethylene content of the polymer, is that the density is from 0.940 to 0.970 $g/cm^3$. Since there is a definite known relationship between the degree of crystallinity and the density of polyethylene, it is convenient to control the density by exercising control over the level of crystallization of the polymer. One method of accomplishing this is to control the molecular structure of the polymer. Since crystallinity in polyethylene is primarily a function of the number of branches along the polymer chain, one may, for example, introduce more side chains and thereby decrease crystallinity. Conversely, one may conduct the reaction of the monomers such that relatively fewer branches are formed and thereby produce a polymer which is more crystalline.

The rate of cooling will also affect the crystallinity of extruded or cast films of polyethylene. A film which undergoes very gradual cooling or annealing from the melt will have a relatively higher crystalline content, and hence higher density, than an otherwise identical film which has been rapidly quenched after formation. These relationships and their utilization to manipulate the physical character of polyethylene products are known in the art, and a detailed discussion may be found in the article on Ethylene Polymers in Vol. 6 of the Encyclopedia of Polymer Science and Technology, N.M. Bikales executive editor, published by Interscience Publishers (John Wiley & Sons, Inc.).

The high density film thus formed, especially by the blown-film method, orients and imparts a crystalline morphology that makes the film very weak in the machine direction.

In accordance with the present invention, however, the films made from high density polyethylene homopolymer/copolymer are irradiated, that is to say they are subjected to ionizing radiation.  Ionizing radiation is inclusive of extremely short-wavelength, high energy penetrating rays such as gamma rays, X-rays, and subatomic particles accelerated in cyclotrons, betatrons, synchrotrons, and linear accelerators.  Electron beam irradiation is especially preferred.  The amount of radiation necessary to favorably affect the polymer film or sheet is generally from 1 to 100 megarads, from 3 to 15 megarads being suitable in most cases.

A "rad" is a convenient term for expressing radiation dosage or the amount of energy absorbed by a material as a result of exposure to ionizing radiation.  One rad is the amount of ionizing radiation absorbed during the deposition of 100 ergs of energy in one gram of material irradiated.

The following examples illustrate the method of the invention.

### EXAMPLES

A 25.4 $\mu$m, high density polyethylene film (Dupont's Alathon 7320 having a density of 0.95 g/cm$^3$) was prepared by the blown-film extrusion process on a 25.4 mm extruder.

Following a period of crystallization, the film was irradiated on a continuous electron beam unit at dosage levels of 5, 10 and 15 megarads.

Physical tests were then performed on samples of the film in both the machine and transverse directions, and the results are shown in the Table below.

TABLE

| Dose in Megarads | 0 | 5 | 10 | 15 |
|---|---|---|---|---|
| Yield Strength MD | 2.55 | 2.48 | 3.10 | 3.03 |
| kPa x $10^{-4}$ TD | 2.41 | 2.76 | 2.41 | No Yield |
| Break Strength MD | 4.27 | 2.14 | 3.17 | 2.86 |
| kPa x $10^{-4}$ TD | 1.72 | 1.38 | 2.14 | 1.24 |
| Tensile Toughness MD | 86.7 | 51.3 | 114.9 | 83.2 |
| $J/cm^3$ TD | Nil | 17.3 | 45.8 | Nil |
| Elmendorf Tear MD | Nil | 0.629 | 0.669 | 0.629 |
| g/$\mu$m TD | 29.53 | 25.59 | 25.83 | 15.91 |

Yield Strength, Break Strength, and Tensile Toughness
were determined in accordance with ASTM-D882; Elmendorf Tear
Measurements were made in accordance with ASTM-D1922.

The minor decrease in properties which were shown in some
cases by irradiated samples produced by the method of this
invention were negligible insofar as the usefulness of the resins
for the manufacture of films is concerned. More importantly, the
tear characteristics of films produced in accordance with the
present invention in the machine direction were increased from an
effectively non-existent tear resistance to a high and commercially
useful tear resistance as measured by the Elmendorf tear test.

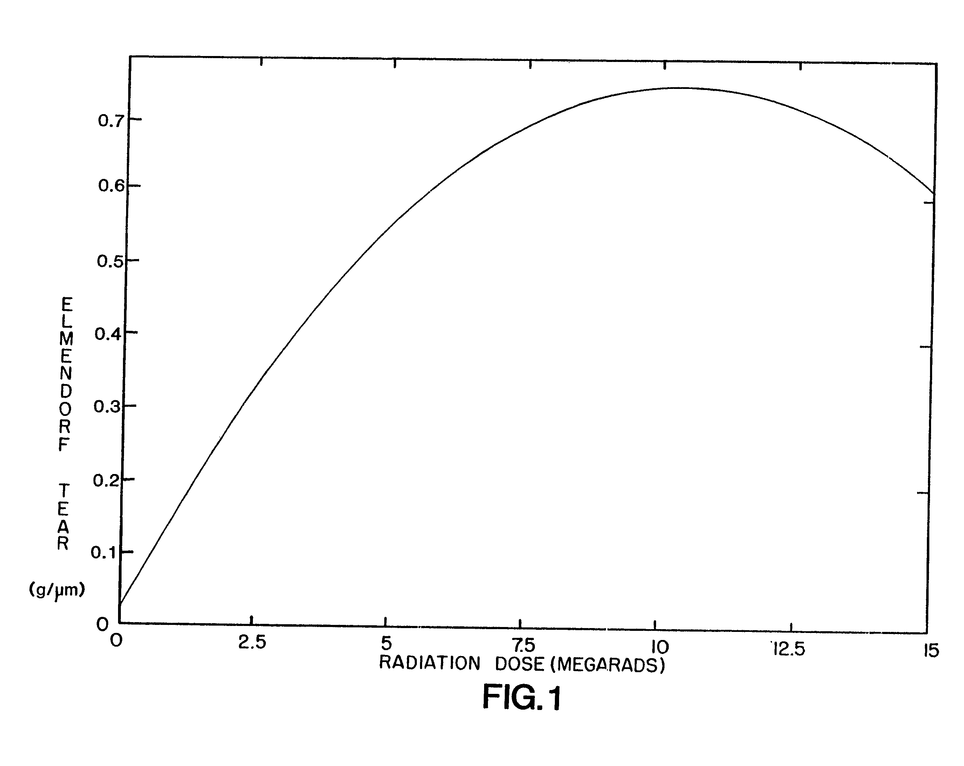

Figure 1 of the accompanying drawings is a plot of
Elmendorf tear strength against radiation dosage, and it can be
seen that maximum tear strength was achieved on this particular
film at an irradiation dosage of 10 megarads.

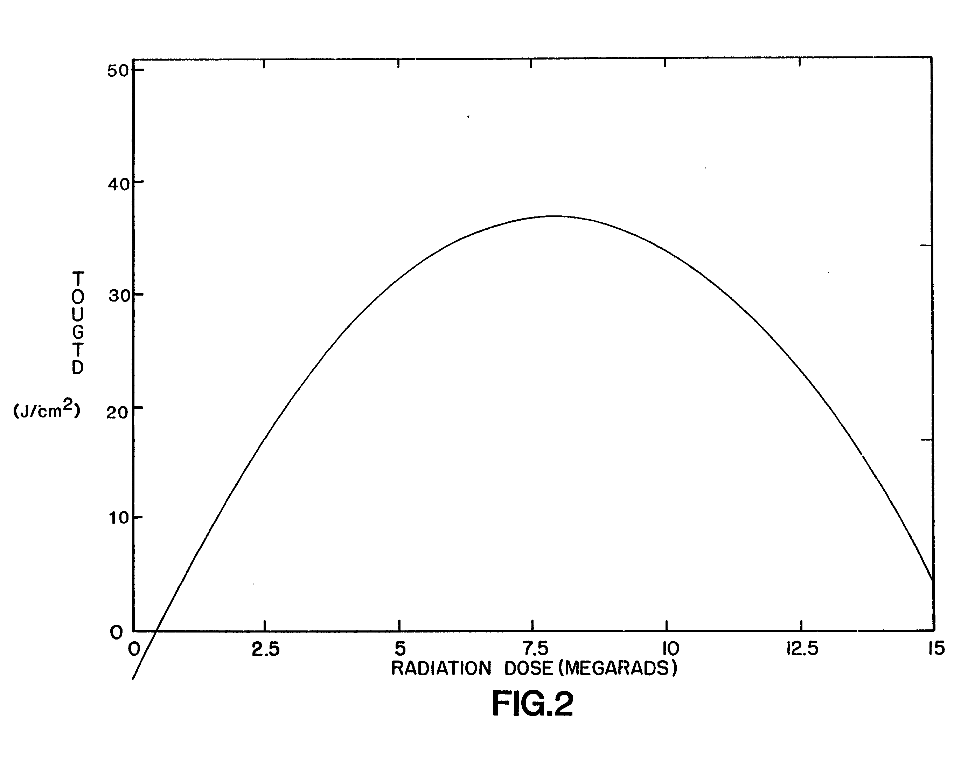

Figure 2 of the accompanying drawings is a plot of overall
tensile toughness in the transverse direction (the area found under
the stress-strain curve for each sample) against radiation dosage
and it can be seen that maximum toughness occurs at a dosage level
of about 7.5 megarads. Tensile Toughness represents the total amount of work energy required to break the film by pulling it apart. In the case of this high density film, the tensile toughness in the transverse direction is improved from zero to at least 45 $J/cm^3$ upon irradiation with a high energy electron beam.

Based on the results of the tests performed on this particular sample, it appears that the optimum dosage for the film is somewhere between 7.0 and 12.0 megarads. It is, of course, recognized that optimum dosage may vary from this range for other films prepared from other polymers.

These measurements indicate a marked improvement in the physical characteristics of high density polymer films which are normally very weak and would not ordinarily be considered useful for many commercial applications. It is speculated that the irradiation of high density polyethylene film as described herein probably causes some degree of cross-linking which strengthens the film in the normally weak direction.

## Claims

1. A method for producing a high density film of an ethylene homopolymer or a copolymer of ethylene and up to 10 weight percent of one or more other monomers copolymerizable with ethylene having a high tensile strength and a high tear resistance in the machine direction, which comprises forming a film from the high density ethylene polymer, allowing the film to crystallize and subjecting the film to ionizing radiation without applying to the film a positive orientation step.

2. A method according to claim 1, wherein the monomer copolymerizable with ethylene is an olefin having from 3 to 8 carbon atoms.

3. A method according to claim 1 or claim 2, wherein the film is formed by a blown-tube extrusion process.

4. A method according to any one of claims 1 to 3, wherein the ionizing radiation is a high energy electron beam.

5. A method according to any one of claims 1 to 4, wherein the film is subjected to from 1 to 100 megarads of ionizing radiation.

6. A method according to claim 5, wherein the film is subjected to from 3 to 15 megarads of ionizing radiation.

1554n

RADIATION DOSE (MEGARADS)

FIG.1

FIG.2

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | C 08 J 7/10<br>D 01 F 6/02<br>B 29 D 7/20 |
| D/A | US - A - 2 855 517 (GRACE)<br><br>* claims 1,4 * | 1,4 | |
| D/A | US - A - 2 878 174 (GRACE)<br><br>* claims 1,6 * | 1,4 | |
| D/A | US - A - 2 906 679 (GENERAL ELECTRIC)<br><br>* claims 1,6 * | 1,4 | **TECHNICAL FIELDS SEARCHED (Int.Cl. 3)**<br><br>C 08 J<br>D 01 F<br>B 29 D |
| D/A | US - A - 3 144 398 (GRACE)<br><br>* claims 1,3 * | 1,4 | |
| D/A | US - A - 3 362 897 (GENERAL ELECTRIC)<br><br>* claims 1,3,5; column 3, lines 49-60; column 6, lines 39-42 * | 1,4 | |
| A | US - A - 3 886 056 (KITAMARU)<br><br>* claims 1,2; column 1, lines 44-49 * | 1,4 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on. or after the filing date<br>D: document cited in the application<br>L: document cited for other reasons |
| A | PLASTICS ENGINEERING, vol. 32, no. 8, August 1978 GREENWICH, Conn. (US)<br><br>./. | | &: member of the same patent family, corresponding document |

| Place of search | Date of completion of the search | Examiner |
|---|---|---|
| The Hague | 15-04-1982 | CATTOIRE |

EPO Form 1503.1 06.78

| Category | Citation of document with indication, where appropriate, of relevant passages | Relevant to claim |
|---|---|---|
| | A. BARLOW et al.:"Radiation curing works best for IR films and wire coatings" pages 42-45 <br><br> * pages 42,43, under: "Physical property changes"; page 44, under: "Film properties" * <br><br> -------- | 1,3-6 |

**DOCUMENTS CONSIDERED TO BE RELEVANT**

CLASSIFICATION OF THE APPLICATION (Int. Cl.³)

TECHNICAL FIELDS SEARCHED (Int. Cl.³)